# EUROPEAN PATENT APPLICATION

(11) **EP 3 324 233 A1**
(43) Date of publication of application: **23.05.2018**
(21) Application number: 16824256.8
(22) Date of filing: 27.06.2016
(51) Int. Cl.: G02C 11/00, G02B 27/02, H04N 5/64

(54) **MOUNTING FIXTURE FOR WEARABLE DEVICE**

(30) Priority: 13.07.2015 JP 2015139326
(71) Applicant: Westunitis Co., Ltd., Kita-ku Osaka-shi, Osaka 530-0011 (JP)
(72) Inventor: FUKUDA Takahito, Osaka-shi Osaka 530-0011 (JP); KINOSHITA Tadatoshi, Osaka-shi Osaka 530-0011 (JP)
(74) Representative: Ström & Gulliksson AB
(86) International application number: PCT/JP2016/069038
(87) International publication number: WO 2017/010276

(57) **Abstract**

To provide a mounting fixture for a wearable device that can be used by attaching to a pair of eyeglasses. A body 2 includes a U-shaped metallic band 4 and a synthetic resin made-holding member 6, the holding member 6 being attached to a top end of the U-shaped band 4. A coupling part 14 is provided on a rear end of the holding member 6, and the top end of the U-shaped band 4 is slidably inserted thereinto. The top end is provided with a securing member 8 that grips a temple of the pair of eyeglasses.

## Description

### TECHNICAL FIELD

The present invention relates to a technique for attaching a wearable device to a pair of eyeglasses.

### BACKGROUND ART

A mounting fixture for attaching a wearable device to a pair of eyeglasses is proposed. For example, JP 2013-160952 A discloses a unique structure of a modern part (portions fitted above the ears) of a pair of eyeglasses, the modern part being capable of receiving the wearable device. With the configuration, the wearable device can be worn stably.

### SUMMARRY OF INVENTION

### TECHNICAL PROBLEM

In JP 2013-160952 A, however, the pair of eyeglasses itself is used as a mounting fixture for a wearable device. Therefore, a person who uses the pair of eyeglasses in dairy life needs another new pair of eyeglasses for the dedicated use of the wearable device.

The present invention was made to solve the above described problem. Namely, a purpose of the present invention is to provide a mounting fixture for a wearable device, the mounting fixture being capable of attaching the wearable device to a pair of eyeglasses.

### SOLUTION TO PROBLEM

Some characteristics are listed below. The characteristics can be applied independently.
(1) and (2) A mounting fixture according to the present invention is a mounting fixture for attaching a wearable device to a pair of eyeglasses, the mounting fixture including:
   a U-shaped body;
   an attachment part for attaching the wearable device, the attachment part being provided on the outside of the body; and
   a securing part for securing to a temple of the pair of eyeglasses, the securing part being provided on a distal end part of the body.

   With the configuration, the wearable device can be used by securing the mounting fixture onto the temple of the pair of eyeglasses.
(3) The mounting fixture according to the present invention is characterized in that the securing part is configured to grip the temple of the pair of eyeglasses from the above.
   With the configuration, the mounting fixture can be secured onto the temple firmly and stably.
(4) The mounting fixture according to the present invention is characterized in that the securing part can be detachably put on the body with the right and left sides reversed and a position for gripping the temple can be shifted in an inside and outside direction.
   With the configuration, a position for gripping the temple can be adjusted in the back and forward direction.
(5) The mounting fixture according to the present invention is characterized in that a bottom end of the body partially lies on the temple of the pair of eyeglasses when being worn and a covering part is provided such that the covering part contacts the outside of the temple.
   With the configuration, the mounting fixture can be attached to the temple stably.
(6) The mounting fixture according to the present invention is characterized in that the attachment part is provided so as to keep balance at a position in front of ears of a wearer when the wearable device is attached.
   With the configuration, the pair of eyeglasses can be prevented from floating up when the wearable device is attached.
(7) A wearable device according to the present invention is a wearable device capable of being attached to a pair of eyeglasses, the wearable device including:
   a U-shaped mounting fixture body;
   a wearable device secured on the outside of the mounting fixture body; and
   a securing part for securing to a temple of the pair of eyeglasses, the securing part being provided on a distal end part of the mounting fixture body.

   With the configuration, the wearable device can be used by securing the mounting fixture on the temple of the pair of eyeglasses.
(8) The wearable device according to the present invention is characterized in that the securing part is configured to grip the temple of the pair of eyeglasses from the above.
   With the configuration, the mounting fixture can be secured to the temple firmly and stably.
(9) The wearable device according to the present invention is characterized in that the securing part can be detachably put on the body with the right and left sides reversed, and a position for gripping the temple can be shifted in an inside and outside direction.
   With the configuration, the position for gripping the temple can be adjusted in a back and forward direction.
(10) The wearable device according to the present invention is characterized in that a bottom end of the body partially lies on the temple of the pair of eyeglasses when being worn, and a covering part is provided such that the covering part contacts the outside of the temple.
   With the configuration, the wearable device can be attached to the temple in a stable manner.
(12) The wearable device according to the present invention is characterized in that the wearable device is balanced at a position in front of ears of a wearer.

With the configuration, the pair of eyeglasses can be prevented from floating up.

### BRIEF DESCRIPTION OF DRAWINGS

FIG. 1 illustrates a state that a mounting fixture 20 according to one embodiment of the present invention is attached to a pair of eyeglasses 22 and a wearable computer 26 is mounted thereon.
FIG. 2 illustrates the mounting fixture 20.
FIG. 3A and FIG. 3B illustrate a securing member 8 in detail, and FIG. 3C and FIG. 3D illustrate a distal end part of a holding member 6 in detail.
FIG. 4 illustrates a state that the securing member 8 is attached to the holding member 6.
FIG. 5 illustrates a step part 11 in detail.
FIG. 6A illustrates a guide member 100 of the wearable computer 26 and FIG. 6B illustrates an attachment guide 12 of the holding member 6.
FIG. 7 illustrates the wearable computer 26.
FIG. 8 illustrates another securing member 8.

### DESCRIPTION OF EMBODIMENTS

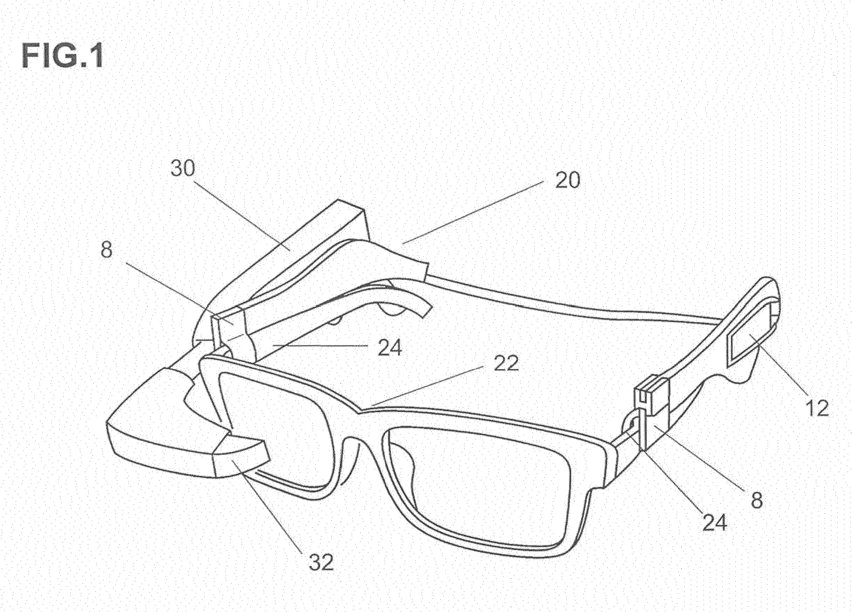

FIG. 1 illustrates a mounting fixture 20 for a wearable device according to one embodiment of the present invention. FIG. 1 illustrates a state that a mounting fixture 20 is attached to a temple 24 of a pair of eyeglasses 22, and a wearable computer 30 as the wearable device is secured thereon. A display 32 of the wearable computer 30 is secured in such a manner that the display 32 is positioned in front of eyes of a wearer.

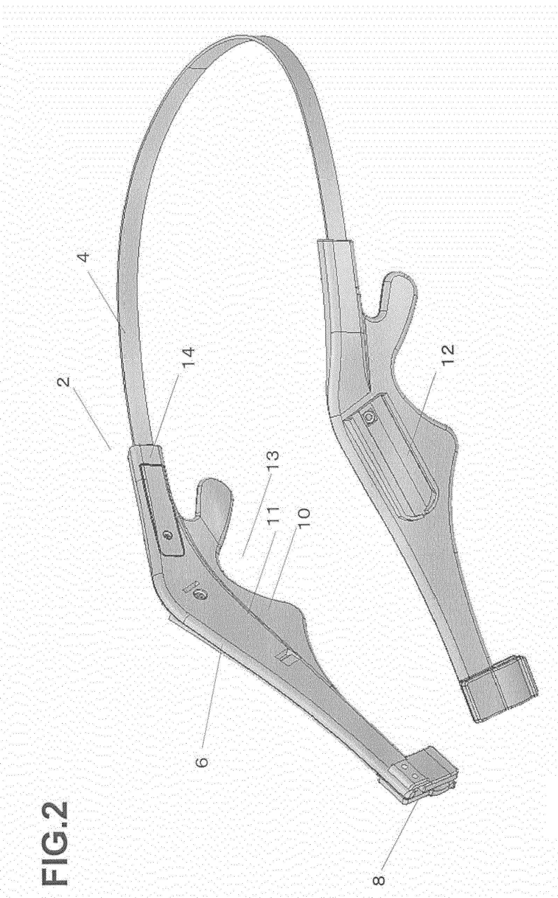

FIG. 2 illustrates the mounting fixture 20 in detail. A body 2 includes a U-shaped metallic band 4 and a synthetic resin made-holding member 6 attached to a top end of the U-shaped band 4. A rear end of the holding member 6 is provided with a coupling part 14 into which the top end of the U-shaped band 4 is slidably inserted. By sliding the U-shaped band 4 and bringing the U-shaped band 4 into contact with the back of the neck of the wearer, a firm wearing state can be realized.

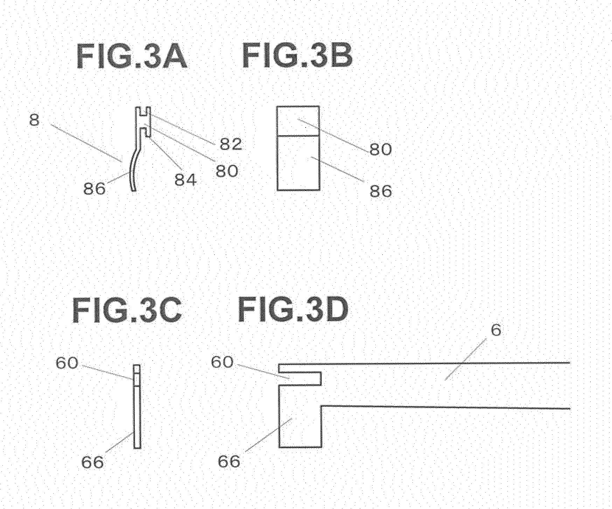

A securing member 8 is attached to a top end of the holding member 6. The securing member 8 is illustrated in detail in FIG. 3A and FIG. 3B. FIG. 3A is a view when viewed from the distal end side, and FIG. 3B is a side view.

The securing member 8 includes a base part 80 and a clipping piece 86. As illustrated in FIG. 3A, the base part 80 is formed into an H shape when viewed from the top end side and is provided with recessed parts 82, 84 on both sides thereof. Further, a clipping piece 86 extending downwardly from the base part 80 is formed into an outwardly curving shape.

A distal end part of the holding member 6 to which the securing member 8 is attached is illustrated in detail in FIG. 3C and FIG. 3D. FIG. 3C is a view when viewed from the distal end side, and FIG. 3D is a side view.

The distal end part of the holding member 6 is provided with a clipping piece 66 which extends linearly and downwardly. Further, a recessed part 60 is provided above the clipping piece 66. The recessed part 60 is formed to have a width capable of receiving the H-shaped base part 80 of the securing member 8.

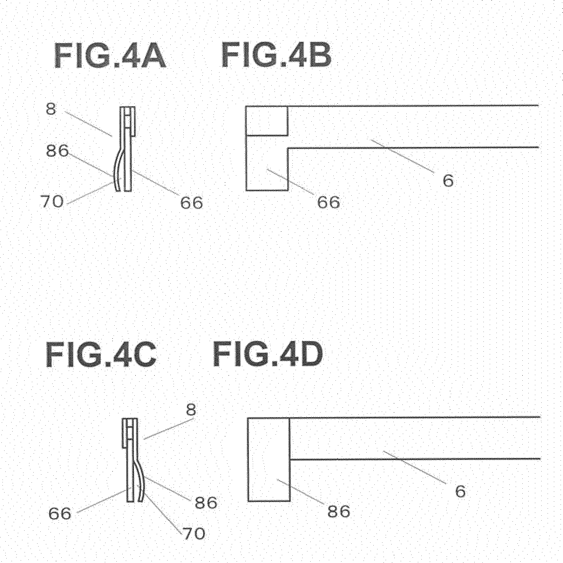

The distal end part of the holding member 6 to which the securing member 8 is attached is illustrated in FIG. 4A and FIG. 4B. FIG. 4A is a view when viewed from the distal end side, and FIG. 4B is a side view.

As shown in FIG. 4A, the clipping piece 86 of the securing member 8 and the clipping piece 66 of the holding member 6 cooperatively form a holding space 70. As shown in FIG. 1, the mounting fixture 20 is secured on the pair of eyeglasses by inserting the temple 24 into the holding space 70.

In the present embodiment, the distal end part of the mounting fixture 20 is provided with the securing member 8 which grips the temple 24, thereby holding the mounting fixture 20 on the temple 24. With the configuration, the mounting fixture 20 can be held stably and firmly.

Also, as shown in FIG. 4C and FIG. 4D, the securing member 8 can be put on with the right and left sides reversed. Accordingly, a position of the holding space 70 can be changed from the outside of the clipping piece 66 to the inside of the clipping piece 66. With the configuration, a mounting degree to the pair of eyeglasses 22 can be changed.

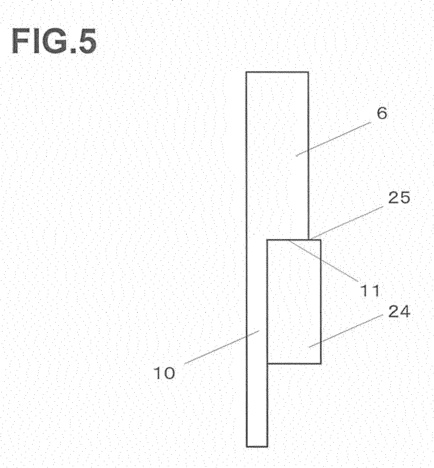

Referring back to FIG. 2, the holding member 6 has a step part 11 that contacts an upper surface of the temple 24. FIG.5 shows a sectional view of adjacent part of the step part 11. The step part 11 of the holding member 6 is brought into contact with an upper surface 25 of the temple 24 of the pair of eyeglasses With the configuration, the holding member 6 is stably supported by the temple 24.

Further, as shown in FIG. 1, the right and left holding members 6 are configured to have a width narrower than a distance between the right and left temples 24 of the pair of eyeglasses when not being worn. Therefore, when being worn, the U-shaped band 4 is opened to adjust the distance between the right and left holding members 6 to the distance between the temples 24. With the configuration, as shown in FIG. 5, while being worn, the holding members 6 receive an inwardly pushing force (arrow A direction) because of a restoring force of the U-shaped band 4. In the present embodiment, the step part 11 is provided with a downwardly extending guide 10 outside the step part 11. With the configuration, the holding members 6 can be firmly secured on the pair of eyeglasses 22. Incidentally, as shown in FIG. 1, in order to avoid touching to ears of a wearer, the guide 10 is provided with a recessed part 13.

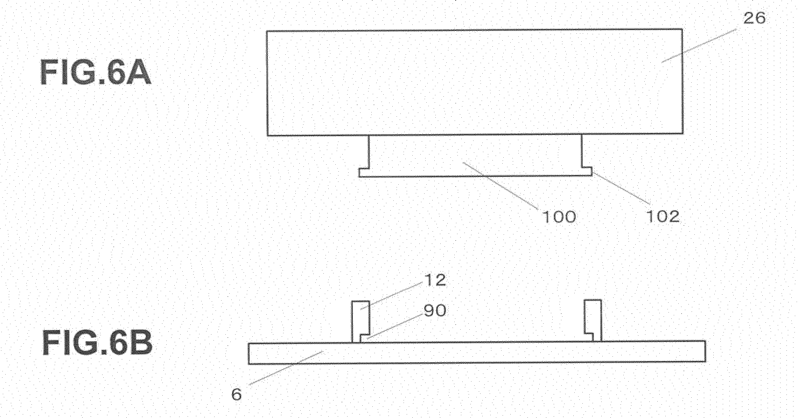

Again, referring back to FIG. 2, the outsides of the right and left holding members 6 are provided with attachment guides 12, respectively, for receiving the wearable device. A cross section view illustrating an adjacent area of the attachment guide 12 is shown in FIG. 6B. A root part of the attachment guide 12 is provided with a recessed part 90, to which the guide member 100 of the wearable device is inserted and secured.

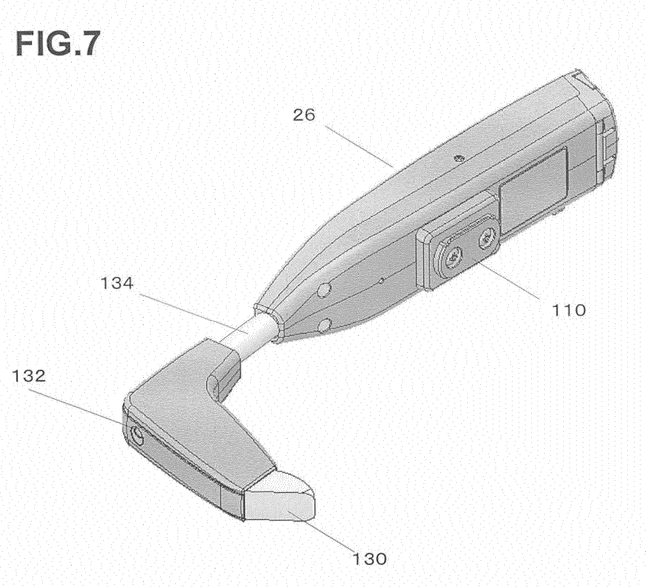

FIG. 7 illustrates an example of a detachable wearable device. Here, a wearable computer 26 is exemplified. The wearable computer 26 includes therein a CPU, a flash memory, a battery (not shown), etc. The distal end part is provided with an optical transmission head mount display 130 and a camera 132 via a flexible joint 134. An angle, etc. of the optical transmission head mount display 130 can be changed with the help of the flexible joint 134.

A guide member 110 is provided inside thereof. FIG. 6A is a cross section view of an adjacent area of the guide member 110. The distal end part of the guide member 110 is provided with a projected part 102. The projected part 102 is configured to be engaged with the recessed part 90 (see, FIG. 6B) of the attachment guide 12 of the holding member 6. With the configuration, the wearable computer 26 can be secured in such a manner that the guide member 110 is engaged from the back side of the attachment guide 12. Meanwhile, a top end side of the attachment guide 12 is not open and is configured to stop the guide member 110.

The attached wearable computer 26 is heavier than the pair of eyeglasses 22 and the mounting fixture 20. In the present embodiment, the guide member 110 and the attachment guide 12 are positioned in such a manner that, when being worn, the wearable device such as the wearable computer 26 is balanced at a position slightly (about 1 cm to 10 cm) in front of the ears of the wearer. With the configuration, the pair of eyeglasses can be prevented from floating up when the wearable device is attached thereto.

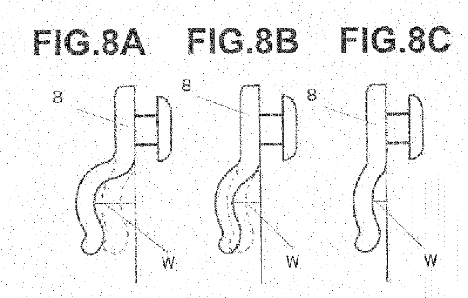

In the above described embodiment, a case where one type of securing member 8 was used was described. However, as shown in FIG. 8A, FIG. 8B, and FIG. 8C, a plurality of securing members 8 having different widths W is prepared and the securing member 8 can be changed according to a thickness of the temple 24 of the pair of eyeglasses 22 to be worn.

In the above described embodiment, the wearable computer 26 as the wearable device is attached. Here, it is possible to attach wearable devices such as an LED light, a barcode reader, a battery, a camera, and a projector. Further, in the above description, a case where only one wearable device is attached is exemplified, but two wearable devices can be attached by using the right and left attachment guides 12.

In the above described embodiment, the wearable device is detachably attached to the mounting fixture 20. As a matter of course, the wearable device may be formed into one piece with the mounting fixture 20.

In the above described embodiment, the securing member 8 is detachable. As a matter of course, it is possible to form the securing member 8 integrally with the holding member 6.

## Claims

1. A mounting fixture for attaching a wearable device to a pair of eyeglasses, the mounting fixture comprising:
a U-shaped body;
an attachment part for attaching the wearable device, the attachment part being provided on the outside of the body; and
a securing part for securing to a temple of the pair of eyeglasses, the securing part being provided on a distal end part of the body.

2. A mounting fixture part for attaching a wearable device to a pair of eyeglasses, the mounting fixture part comprising:
a coupling part for coupling a U-shaped body;
an attachment part for attaching the wearable device, the attachment part being provided on the outside of the body; and
a securing part for securing to a temple of the pair of eyeglasses, the securing part being provided on a distal end part of the body.

3. The mounting fixture according to claim 1 or the mounting fixture part according to claim 2, wherein the securing part is configured to grip the temple of the pair of eyeglasses from the above.

4. The mounting fixture or the mounting fixture part according to claim 3, wherein the securing part is detachably put on the body with the right and left sides reversed and a position for gripping the temple can be shifted in an inside and outside direction.

5. The mounting fixture or the mounting fixture part according to any one of claims 1 to 4, wherein a bottom end of the body partially lies on the temple of the pair of eyeglasses when being worn, and a covering part is provided such that the covering part contacts the outside of the temple.

6. The mounting fixture or the mounting fixture part according to any one of claims 1 to 5, wherein the attachment part is provided so as to keep balance at a position in front of ears of a wearer when the wearable device is attached.

7. A wearable device capable of being attached to a pair of eyeglasses, the wearable device comprising:
a U-shaped mounting fixture body;
a wearable device secured on the outside of the mounting fixture body; and
a securing part for securing to a temple of the pair of eyeglasses, the securing part being provided on a distal end part of the mounting fixture body.

8. The wearable device according to claim 7, wherein the securing part is configured to grip a temple of the pair of eyeglasses from the above.

9. The wearable device according to claim 8, wherein the securing part is detachably put on the body with the right and left sides reversed and a position for gripping the temple can be shifted in an inside and outside direction.

10. The wearable device according to any one of claims 7 to 9, wherein a bottom end of the body partially lies on the temple of the pair of eyeglasses when being worn, and a covering part is provided such that the covering part contacts the outside of the temple.

11. The wearable device according to any one of claims 7 to 10, wherein the wearable device is balanced at a position in front of ears of a wearer.

12. A method for attaching a wearable device to a pair of eyeglasses, wherein a wearable device or a mounting fixture with the wearable device is secured on a temple of the pair of eyeglasses for wearing.
